# EUROPEAN PATENT SPECIFICATION

(11) **EP 3 718 767 B1**
(45) Date of publication and mention of the grant of the patent: **08.07.2026**
(21) Application number: 20167494.2
(22) Date of filing: 01.04.2020
(51) Int. Cl.: B32B 15/12, B32B 7/06, B65D 1/34

(54) **REEL, SEMI-RIGID FOOD CONTAINER AND METHOD FOR MANUFACTURING SAID CONTAINER**
SPULE, HALBSTARRER LEBENSMITTELBEHÄLTER UND VERFAHREN ZUR HERSTELLUNG DIESES BEHÄLTERS
BOBINE, CONTENEUR SEMI-RIGIDE POUR ALIMENTS ET PROCÉDÉ DE FABRICATION DUDIT CONTENEUR

(30) Priority: 05.04.2019 IT 201900005224
(43) Date of publication of application: 07.10.2020
(73) Proprietor: Slim Aluminium S.p.A., 04012 Cisterna di Latina (Latina) (IT)
(72) Inventor: MASCIOTTA, Paolo, I-04012 Cisterna di Latina (Latina) (IT)
(74) Representative: Pipoli, Massimo

(56) References cited:
- EP-A1- 3 520 616
- GB-A- 653 281
- GB-A- 892 366
- US-A1- 2004 149 381
- US-A1- 2005 013 951
- US-A1- 2011 031 375
- US-A1- 2013 228 614

## Description

The present invention relates to the technical field of food-grade reels. More preferably, the present invention relates to the technical field of reels for manufacturing semi-rigid food containers, and more in particular it relates to a reel, a semi-rigid food container and a method for manufacturing such a container.

Both in the domestic environment and in the commercial field, the use of semi-rigid aluminum food containers is known, typically made in the form of aluminum trays, with which respective cardboard lids, which may be coupled in a removable manner to the trays themselves, are also sometimes associated. Such containers, which are used, for example and not by way of limitation, to bake food in the oven as well as to prepare and store food in the refrigerator, are usually obtained from food-grade aluminum sheets obtained by cutting portions from an aluminum reel. The aluminum sheets obtained by cutting the reel are subjected to a deep-drawing operation so as to obtain the container. GB892366 relates to a deep-drawn laminate article.

The aluminum containers of the prior art described above have some drawbacks. In fact, although the aluminum used for manufacturing the containers is food-grade aluminum, this aluminum is not however adapted to prepare and preserve acidic or salty foods. Furthermore, the food containers described above are not non-stick containers while such a feature may be required for the preparation of some types of food.

The present invention proposes to offer a solution which is capable of overcoming, or at least partially reducing, the drawbacks described above with reference to the aluminum food containers of the prior art.

It is a further object of the present invention, in addition or alternatively to the aforesaid object, to provide a semi-rigid food container which is capable of overcoming, at least partially reducing, the drawbacks described above with reference to the aluminum food containers of the prior art and which is adapted for waste sorting.

This and other objects are achieved by a reel, as defined in the appended claim 1 in the more general form thereof, and in the dependent claims in some particular embodiments.

It is a further aspect of the present invention to provide a semi-rigid food container as defined in claim 6.

It is a further aspect of the present invention to provide a method for manufacturing a semi-rigid food container as defined in claim 8.

The invention will become more apparent from the following detailed description of the embodiments thereof, made by way of example, and therefore in no restrictive manner, in relation to the accompanying drawings, in which:
- Figure 1 shows a perspective view of a food-grade reel in accordance with a currently preferred embodiment;
- Figure 2 shows a sectional plane view of a portion of the reel in Figure 1 in accordance with the line A-A in Figure 1;
- Figure 3 shows a sectional and diagrammatic plane view of a step of manufacturing a semi-rigid food container;
- Figure 4 shows a sectional plane view of a semi-rigid food container according to a currently preferred embodiment obtained by means of the manufacturing step in Figure 3.

In the accompanying Figures, the same or similar elements will be indicated by means of the same reference numerals.

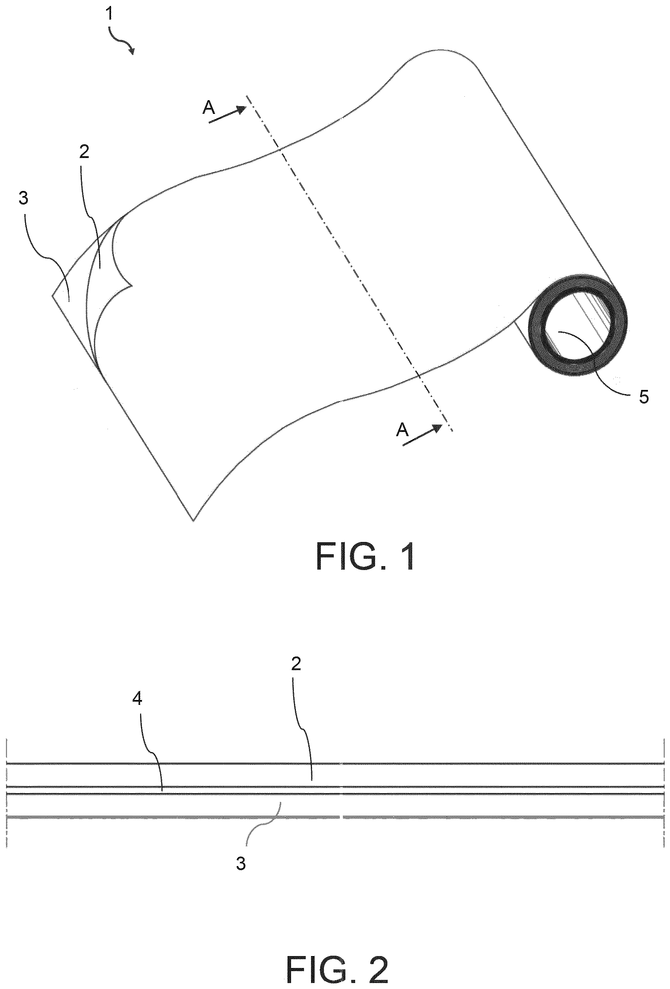

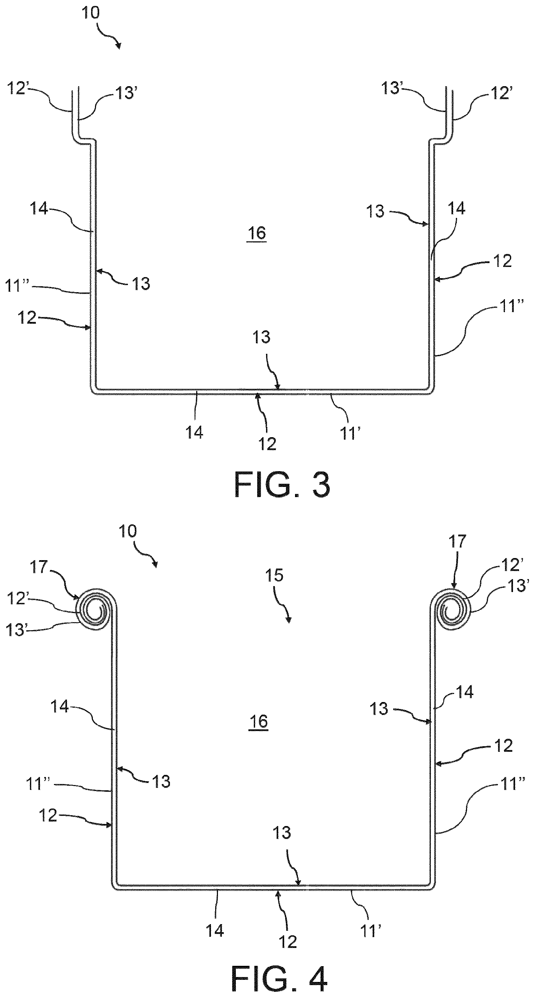

With reference, initially, to Figures 1-2, a reel according to a currently preferred embodiment has been overall indicated with the reference numeral 1. The reel 1 is a food-grade reel. In accordance with an embodiment, the reel 1 is a reel for manufacturing semi-rigid food containers, such as, for example, and not by way of limitation, the container overall indicated with reference numeral 10 which is shown in Figure 4 and which will be described in greater detail below in the present description. In accordance with an embodiment, the reel 1 is a reel having a weight of from a hundred kilograms to a few thousand kilograms, for example, a weight from about 100kg to about 2-3t. In accordance with an embodiment, the reel 1 may also be manufactured as a food-grade reel, adapted, for example, for domestic use, i.e., essentially a roll similar to the aluminum sheet rolls commonly used, for example, in the domestic environment for wrapping foods to be stored, for example in the refrigerator, or to be transported. The reel 1 comprises a plurality of sheets 2, 3 wrapped together. In other words, the reel 1 is a roll formed by said plurality of sheets 2, 3 band wrapped over one another. In accordance with an embodiment, the reel 1 comprises a support member 5, preferably having a cylindrical shape, about which the sheets 2, 3 of the aforesaid plurality of sheets are wound. Conveniently, the plurality of sheets 2, 3 includes an aluminum sheet 2 and a food-grade paper sheet 3 which are superimposed so that they may be separated from each other. In other words, the sheets 2, 3 are coupled together in a non-permanent manner. In other words, neither a glue nor any other type of material preventing the sheets 2, 3 from being easily separated from one another is provided between the sheets 2, 3. In accordance with an embodiment, the aluminum sheet 2 is a food-grade aluminum sheet. In accordance with an embodiment, the food-grade paper sheet 3 may be a sheet of silicone or non-silicone paper. In practice, the sheet 2 and the sheet 3 are, respectively, an aluminum strip 2 and a food-grade paper strip 3 which are superimposed and wound on each other, preferably about the support member 5, to form the reel 1. In accordance with an embodiment, the food-grade paper of which sheet 3 is made is baking paper. In accordance with an embodiment, the aluminum sheet 2 has a thickness from about 0.03 mm to about 0.3 mm. Furthermore, the food-grade paper sheet 3 has a weight from about 20g/m² to about 80g/m².

With reference to Figure 1, in accordance with an embodiment, the sheet 2 is arranged on the external side of the reel 1. However, in accordance with an alternative embodiment, the sheet 2 and the sheet 3 may be inverted, i.e., the sheet 3 may be arranged on the external side of the reel 1.

In accordance with an embodiment, the aforesaid plurality of sheets 2, 3 consists of the aluminum sheet 2 and the food-grade paper sheet 3.

In accordance with an embodiment, the aluminum sheet 2 and the food-grade paper sheet 3 are directly superimposed on each other. In this regard, it should be noted that, for the purposes of the present description, the term "directly" is to be intended as meaning that sheet 2 and sheet 3 are resting on each other and are in contact with each other. In other words, in this case, no intermediate layer made of another material or substance is interposed between the sheets 2 and 3. With reference to Figure 2, in accordance with an alternative embodiment, the reel 1 comprises a food-grade oil layer 4 interposed between the aluminum sheet 2 and the food-grade paper sheet 3. Preferably, the layer 4 comprises at least one oil of vegetable or mineral origin as a technological adjuvant of the food-type or conforming to the European pharmacopoeia. Advantageously, in this way it is possible to facilitate the production of the aforesaid container 10 since the layer 4 guarantees, during the manufacturing of the container 10, a limited adhesion between the sheets 2 and 3 and at the same time allows a relative sliding of such sheets 2, 3. In fact, the absence of a permanent gluing allows the food-grade paper sheet to easily slide under the mold and to take on the same shape as the aluminum sheet once the container 10 has been formed. Furthermore, by virtue of the use of the food-grade oil layer 4, the container 10 remains adapted for food use and the aluminum sheets and food-grade paper may be easily separated, thus making the container 10 adapted for waste sorting. In accordance with an embodiment, an oil layer similar to the layer 4 may also be also provided in the part of the aluminum sheet 2 which is not in contact with the food-grade paper sheet 3, i.e., on the opposite side of the aluminum sheet 2 with respect to the face on which the food-grade oil layer 4 is provided, so as to further facilitate the molding process.

With reference now to Figure 4, the aforesaid semi-rigid food container 10 is shown in cross-section in such a Figure. In accordance with an embodiment, the container 10 is a disposable container. In accordance with an embodiment, the container 10 has the shape of a bowl or of a tray which may or may not be provided with a lid which may be removably coupled to the container 10, preferably a cardboard lid. The container 10 may be manufactured in various shapes, for example, and not by way of limitation, in a rectangular, square or circular shape. In accordance with an embodiment, the container 10 is a container adapted to be used for storing, in the refrigerator, preparing, transporting and baking, in the oven, food. In other words, the container 10 is preferably a container substantially similar to the aluminum trays commonly used, for example, in the domestic environment.

Still with reference to Figure 4, the container 10 comprises an aluminum sheet 12, shaped so as to have a bottom wall 11', an access opening 15 opposite to the bottom wall 11' and a side wall 11'' connected to the bottom wall 11'. The side wall 11'' defines, with the bottom wall 11', a container compartment 16. The access opening 15 allows access to the compartment 16. The container 10 further comprises a food-grade paper sheet 13, received in the compartment 16, so as to cover at least the bottom wall 11' and so as to be separable from the aluminum sheet 12. In accordance with an embodiment, the sheet 13 covers the entire bottom wall 11' and more preferably covers both the bottom wall 11' and the side wall 11".

In accordance with a preferred embodiment, the container 10 is obtained starting from the reel 1 described above. In particular, the sheet 12 and the sheet 13 are obtained by cutting a portion of the reel 1 which is subsequently or simultaneously subjected to a deep-drawing operation for manufacturing the container 10. In other words, the sheets 12, 13 are actually portions of the sheets 2, 3 obtained by cutting, preferably simultaneously, the sheets 2, 3 of the reel 1.

Still with reference to Figure 4, according to an embodiment, the container 10 comprises an edge 17 delimiting the access opening 15. In accordance with an advantageous embodiment, the edge 17 comprises a portion 12' of the aluminum sheet 12 and a portion 13' of the food-grade paper sheet 13 which are folded or rolled together so as to releasably couple together the aluminum sheet 12 and the food-grade paper sheet 13. It should be noted that such an edge 17 is particularly useful in the case in which the sheet 13 and the sheet 12 are directly superimposed on each other since it allows to keep coupled, in a removable manner, the sheets 12, 13, which would easily tend to separate if the sheet 13 was not fixed to the sheet 12 by means of the edge 17. In other words, the edge 17 allows to fix the food-grade paper sheet 13 to the aluminum sheet 12. With reference to Figure 3, a step for manufacturing the container 10 is shown which precedes the step of folding or wrapping the portions 12',13' of the sheets 12, 13 together.

In accordance with an embodiment, alternatively to providing the sheet 13 directly superimposed on the sheet 12, the container 10 may comprise a food-grade oil layer 14 interposed between the aluminum sheet 12 and the food-grade paper sheet 13. In practice, the layer 14 is a portion of the layer 4 of the reel 1.
Generalizing the above description, a method for manufacturing a semi-rigid food container has also been practically described, comprising:
- a step of providing a reel 1 comprising a plurality of sheets 2, 3 wrapped together, said plurality of sheets 2, 3 including an aluminum sheet 2 and a food-grade paper sheet 3 which are superimposed so as to be separated from each other;
- a step of cutting a portion of said reel; and
- a step of deep-drawing said cut portion of the reel.

In accordance with an embodiment, during the step of molding the container 10, the mold itself simultaneously cuts the aluminum sheet 2 and the food-grade paper sheet 3 so as to obtain the sheets 12, 13, and performs the deep-drawing of the sheets 12, 13 so as to shape such sheets 12, 13. In particular, the deep-drawing of the sheets 12, 13 is carried out so that the food-grade paper is arranged on the side which will be used for the contact with the food, while the aluminum in the underlying part. If the portions 12', 13' of the sheets 12, 13 are re-wound curled up on each other, the food-grade paper may be fixed to the aluminum sheet 12, otherwise, in the case of a container with a non-folded edge, the food-grade paper sheet 13 is completely free in the container 10.

On the basis of what has been described above, it is therefore possible to understand how a reel or a semi-rigid food container or a method for manufacturing such a container according to the present description allow to achieve the above mentioned objects with reference to the prior art.

In fact, a container obtained by means of the aforesaid reel allows not to have the food in direct contact with the aluminum and therefore to use the container also for the preparation and preservation of acidic or salty foods for which the use of the aluminum alone is not allowed. In addition, such a container has an anti-sticking function, by virtue of the use of food-grade paper, and may be easily separated after use, thus allowing the correct waste sorting of paper and aluminum.

Without prejudice to the principle of the invention, the embodiments and the constructional details may be widely varied with respect to the above description merely disclosed by way of non-limiting example, without departing from the scope of the invention as defined in the appended claims.

## Claims

1. A reel (1) comprising a plurality of sheets (2,3) wound together, said plurality of sheets (2,3) including an aluminum sheet (2) and a food-grade paper sheet (3);
**characterized in that** the aluminum sheet (2) and the food-grade paper sheet (3) are superimposed such that they can be separated from each other, wherein said reel (1) comprises a food-grade oil layer (4) which is interposed between the aluminum sheet (2) and the food-grade paper sheet (3) or wherein the aluminum sheet (2) and the food-grade paper sheet (3) are directly mutually superimposed, so that said aluminum sheet (2) and food-grade paper sheet (3) are resting on each other and are in contact with each other with no intermediate layer made of another material or substance being interposed between the said aluminum sheet (2) and food-grade paper sheet (3).

2. A reel (1) according to claim 1, wherein said reel (1) is a reel for manufacturing semi-rigid food containers (15).

3. A reel (1) according to claim 1 or 2, wherein said food-grade paper comprises baking paper.

4. A reel (1) according to any one of the preceding claims, wherein said aluminum sheet has a thickness from about 0.03mm to about 0.3mm and said food-grade paper sheet has a weight from about 20g/m² to about 80g/m².

5. A reel (1) according to any one of the preceding claims, wherein said plurality of sheets (2,3) consists of said aluminum sheet (2) and said food-grade paper sheet (3).

6. A semi-rigid food container (10) comprising an aluminum sheet (12) shaped so as to have a bottom wall (11'), an access opening (15) opposite to said bottom wall, and a side wall (11'') connected to said bottom wall (11') which defines a container compartment (16) with said bottom wall (11'), wherein the container (10) comprises an edge (17) delimiting the access opening (15), said container (10) being **characterized in that** comprises a food-grade paper sheet (13) received in the container compartment (16) so as to cover both the bottom wall (11') and the side wall (11'') and such that it can be separated from the aluminum sheet (12), wherein the edge (17) comprises a portion (12') of the aluminum sheet (12) and a portion (13') of the food-grade paper sheet (13) which are folded or rolled together so as to releasably couple together the aluminum sheet (12) and the food-grade paper sheet (13), wherein said container (10) comprises a food-grade oil layer (14) which is interposed between the aluminum sheet (12) and the food-grade paper sheet (13) or wherein the aluminum sheet (12) and the food-grade paper sheet (3) are directly superimposed on each other, so that said aluminum sheet (12) and food-grade paper sheet (13) are resting on each other and are in contact with each other with no intermediate layer made of another material or substance being interposed between the said aluminum sheet (12) and food-grade paper sheet (13).

7. A semi-rigid food container (10) according to claim 6, wherein said container (10) is a container of the disposable type.

8. A method for manufacturing a semi-rigid food container comprising:
- a step of providing a reel (1) comprising a plurality of sheets (2,3) wound together, said plurality of sheets (2,3) including an aluminum sheet (2) and a food-grade paper sheet (3);
- a step of cutting a portion of said reel (1); and
- a step of deep-drawing said cut portion of the reel (1);
said method being **characterized in that** the aluminum sheet (2) and the food-grade paper sheet (3) are superimposed so as to be separated from each other, wherein said reel (1) comprises a food-grade oil layer (4) which is interposed between the aluminum sheet (2) and the food-grade paper sheet (3) or wherein the aluminum sheet (2) and the food-grade paper sheet (3) are directly mutually superimposed, so that said aluminum sheet (2) and food-grade paper sheet (3) are resting on each other and are in contact with each other with no intermediate layer made of another material or substance being interposed between the said aluminum sheet (2) and food-grade paper sheet (3).

## Patentansprüche

1. Spule (1), umfassend eine Vielzahl von zusammen aufgewickelten Bahnen (2,3), wobei die Vielzahl von Bahnen (2,3) eine Aluminiumbahn (2) und eine lebensmitteltaugliche Papierbahn (3) umfasst;
**dadurch gekennzeichnet, dass** die Aluminiumbahn (2) und die lebensmitteltaugliche Papierbahn (3) derart übereinandergelegt sind, dass sie voneinander getrennt werden können, wobei die Spule (1) eine lebensmitteltaugliche Ölschicht (4) umfasst, die zwischen der Aluminiumbahn (2) und der lebensmitteltauglichen Papierbahn (3) angeordnet ist, oder wobei die Aluminiumbahn (2) und die lebensmitteltaugliche Papierbahn (3) unmittelbar gegenseitig übereinandergelegt sind, sodass die Aluminiumbahn (2) und die lebensmitteltaugliche Papierbahn (3) aufeinander aufliegen und miteinander in Kontakt stehen, ohne dass eine Zwischenschicht aus einem anderen Material oder einer anderen Substanz zwischen der Aluminiumbahn (2) und der lebensmitteltauglichen Papierbahn (3) angeordnet ist.

2. Spule (1) nach Anspruch 1, wobei die Spule (1) eine Spule zur Herstellung von halbstarren Lebensmittelbehältern (15) ist.

3. Spule (1) nach Anspruch 1 oder 2, wobei das lebensmitteltaugliche Papier Backpapier umfasst.

4. Spule (1) nach einem der vorhergehenden Ansprüche, wobei die Aluminiumbahn eine Dicke von etwa 0,03 mm bis etwa 0,3 mm aufweist und die lebensmitteltaugliche Papierbahn ein Flächengewicht von etwa 20 g/m² bis etwa 80 g/m² aufweist.

5. Spule (1) nach einem der vorhergehenden Ansprüche, wobei die Vielzahl von Bahnen (2,3) aus der Aluminiumbahn (2) und der lebensmitteltauglichen Papierbahn (3) besteht.

6. Halbstarrer Lebensmittelbehälter (10), umfassend eine Aluminiumbahn (12), die so geformt ist, dass sie eine Bodenwand (11'), eine der Bodenwand gegenüberliegende Zugangsöffnung (15) und eine mit der Bodenwand (11') verbundene Seitenwand (11") aufweist, die zusammen mit der Bodenwand (11') ein Behälterfach (16) definiert, wobei der Behälter (10) einen Rand (17) umfasst, der die Zugangsöffnung (15) begrenzt, wobei der Behälter (10) **dadurch gekennzeichnet ist, dass** er eine lebensmitteltaugliche Papierbahn (13) umfasst, die in dem Behälterfach (16) aufgenommen ist, um sowohl die Bodenwand (11') als auch die Seitenwand (11") zu bedecken, und derart, dass sie von der Aluminiumbahn (12) getrennt werden kann, wobei der Rand (17) einen Abschnitt (12') der Aluminiumbahn (12) und einen Abschnitt (13') der lebensmitteltauglichen Papierbahn (13) umfasst, die zusammen gefaltet oder gerollt sind, um die Aluminiumbahn (12) und die lebensmitteltaugliche Papierbahn (13) lösbar miteinander zu koppeln, wobei der Behälter (10) eine lebensmitteltaugliche Ölschicht (14) umfasst, die zwischen der Aluminiumbahn (12) und der lebensmitteltauglichen Papierbahn (13) angeordnet ist, oder wobei die Aluminiumbahn (12) und die lebensmitteltaugliche Papierbahn (3) unmittelbar übereinandergelegt sind, sodass die Aluminiumbahn (12) und die lebensmitteltaugliche Papierbahn (13) aufeinander aufliegen und miteinander in Kontakt stehen, ohne dass eine Zwischenschicht aus einem anderen Material oder einer anderen Substanz zwischen der Aluminiumbahn (12) und der lebensmitteltauglichen Papierbahn (13) angeordnet ist.

7. Halbstarrer Lebensmittelbehälter (10) nach Anspruch 6, wobei der Behälter (10) ein Behälter vom Einwegtyp ist.

8. Verfahren zur Herstellung eines halbstarren Lebensmittelbehälters, umfassend:
- einen Schritt des Bereitstellens einer Spule (1), die eine Vielzahl von zusammen aufgewickelten Bahnen (2,3) umfasst, wobei die Vielzahl von Bahnen (2,3) eine Aluminiumbahn (2) und eine lebensmitteltaugliche Papierbahn (3) umfasst;
- einen Schritt des Schneidens eines Abschnitts der Spule (1); und
- einen Schritt des Tiefziehens des geschnittenen Abschnitts der Spule (1);
wobei das Verfahren **dadurch gekennzeichnet ist, dass** die Aluminiumbahn (2) und die lebensmitteltaugliche Papierbahn (3) derart übereinandergelegt sind, dass sie voneinander getrennt werden können, wobei die Spule (1) eine lebensmitteltaugliche Ölschicht (4) umfasst, die zwischen der Aluminiumbahn (2) und der lebensmitteltauglichen Papierbahn (3) angeordnet ist, oder wobei die Aluminiumbahn (2) und die lebensmitteltaugliche Papierbahn (3) unmittelbar gegenseitig übereinandergelegt sind, sodass die Aluminiumbahn (2) und die lebensmitteltaugliche Papierbahn (3) aufeinander aufliegen und miteinander in Kontakt stehen, ohne dass eine Zwischenschicht aus einem anderen Material oder einer anderen Substanz zwischen der Aluminiumbahn (2) und der lebensmitteltauglichen Papierbahn (3) angeordnet ist.

## Revendications

1. Une bobine (1) comprenant une pluralité de feuilles (2,3) enroulées ensemble, ladite pluralité de feuilles (2,3) comprenant une feuille d'aluminium (2) et une feuille de papier de qualité alimentaire (3) ;
**caractérisée en ce que** la feuille d'aluminium (2) et la feuille de papier de qualité alimentaire (3) sont superposées de telle sorte qu'elles peuvent être séparées l'une de l'autre, ladite bobine (1) comprenant une couche d'huile de qualité alimentaire (4) qui est interposée entre la feuille d'aluminium (2) et la feuille de papier de qualité alimentaire (3) ou dans laquelle la feuille d'aluminium (2) et la feuille de papier de qualité alimentaire (3) sont directement mutuellement superposées, de sorte que ladite feuille d'aluminium (2) et la feuille de papier de qualité alimentaire (3) reposent l'une sur l'autre et sont en contact l'une avec l'autre sans couche intermédiaire réalisée dans un autre matériau ou une autre substance interposée entre ladite feuille d'aluminium (2) et la feuille de papier de qualité alimentaire (3).

2. Une bobine (1) selon la revendication 1, dans laquelle ladite bobine (1) est une bobine destinée à la fabrication de conteneurs alimentaires semi-rigides (15).

3. Une bobine (1) selon la revendication 1 ou 2, dans laquelle ledit papier de qualité alimentaire comprend du papier cuisson.

4. Une bobine (1) selon l'une quelconque des revendications précédentes, dans laquelle ladite feuille d'aluminium présente une épaisseur d'environ 0,03 mm à environ 0,3 mm et ladite feuille de papier de qualité alimentaire présente un grammage d'environ 20 g/m² à environ 80 g/m².

5. Une bobine (1) selon l'une quelconque des revendications précédentes, dans laquelle ladite pluralité de feuilles (2,3) consiste en ladite feuille d'aluminium (2) et ladite feuille de papier de qualité alimentaire (3).

6. Un conteneur alimentaire semi-rigide (10) comprenant une feuille d'aluminium (12) façonnée de manière à présenter une paroi de fond (11'), une ouverture d'accès (15) opposée à ladite paroi de fond, et une paroi latérale (11") reliée à ladite paroi de fond (11') qui définit un compartiment de conteneur (16) avec ladite paroi de fond (11'), dans lequel le conteneur (10) comprend un bord (17) délimitant l'ouverture d'accès (15), ledit conteneur (10) étant **caractérisé en ce qu'**il comprend une feuille de papier de qualité alimentaire (13) reçue dans le compartiment de conteneur (16) de manière à recouvrir à la fois la paroi de fond (11') et la paroi latérale (11") et de telle sorte qu'elle puisse être séparée de la feuille d'aluminium (12), dans lequel le bord (17) comprend une portion (12') de la feuille d'aluminium (12) et une portion (13') de la feuille de papier de qualité alimentaire (13) qui sont pliées ou enroulées ensemble de manière à coupler de manière détachable la feuille d'aluminium (12) et la feuille de papier de qualité alimentaire (13), dans lequel ledit conteneur (10) comprend une couche d'huile de qualité alimentaire (14) qui est interposée entre la feuille d'aluminium (12) et la feuille de papier de qualité alimentaire (13) ou dans lequel la feuille d'aluminium (12) et la feuille de papier de qualité alimentaire (3) sont directement superposées l'une sur l'autre, de sorte que ladite feuille d'aluminium (12) et la feuille de papier de qualité alimentaire (13) reposent l'une sur l'autre et sont en contact l'une avec l'autre sans couche intermédiaire réalisée dans un autre matériau ou une autre substance interposée entre ladite feuille d'aluminium (12) et la feuille de papier de qualité alimentaire (13).

7. Un conteneur alimentaire semi-rigide (10) selon la revendication 6, dans lequel ledit conteneur (10) est un conteneur du type jetable.

8. Un procédé de fabrication d'un conteneur alimentaire semi-rigide comprenant :
- une étape consistant à fournir une bobine (1) comprenant une pluralité de feuilles (2,3) enroulées ensemble, ladite pluralité de feuilles (2,3) comprenant une feuille d'aluminium (2) et une feuille de papier de qualité alimentaire (3) ;
- une étape consistant à découper une portion de ladite bobine (1) ; et
- une étape d'emboutissage profond de ladite portion découpée de la bobine (1) ;
ledit procédé étant **caractérisé en ce que** la feuille d'aluminium (2) et la feuille de papier de qualité alimentaire (3) sont superposées de manière à être séparées l'une de l'autre, dans lequel ladite bobine (1) comprend une couche d'huile de qualité alimentaire (4) qui est interposée entre la feuille d'aluminium (2) et la feuille de papier de qualité alimentaire (3) ou dans lequel la feuille d'aluminium (2) et la feuille de papier de qualité alimentaire (3) sont directement mutuellement superposées, de sorte que ladite feuille d'aluminium (2) et la feuille de papier de qualité alimentaire (3) reposent l'une sur l'autre et sont en contact l'une avec l'autre sans couche intermédiaire réalisée dans un autre matériau ou une autre substance interposée entre ladite feuille d'aluminium (2) et la feuille de papier de qualité alimentaire (3).
